# EUROPEAN PATENT APPLICATION

(11) **EP 0 959 052 A1**
(43) Date of publication of application: **24.11.1999**
(21) Application number: 97912526.7
(22) Date of filing: 20.11.1997
(51) Int. Cl.: C04B 28/02, C04B 22/06, C04B 22/14, C04B 40/02

(54) **CEMENT COMPOSITION AND PROCESS FOR PRODUCING CONCRETE AND PRECAST CONCRETE WITH THE SAME**

(30) Priority: 11.08.1997 JP 21648797
(71) Applicant: Maeta Techno-Research, Inc., Sakata-shi, Yamagata-ken 998 (JP)
(72) Inventor: KAWANO, Toshio, Sakata-shi Yamagata-ken 998 (JP)
(74) Representative: Wain, Christopher Paul
(86) International application number: JP9704239
(87) International publication number: WO9907647

(57) **Abstract**

Disclosed is a cement composition, comprising Portland cement or a blended cement, a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO, and a sulfate of an alkaline metal in an amount not larger than 10% by weight.

## Description

### Technical Field

The present invention relates to a cement composition, concrete prepared by using the composition, and a method of manufacturing a concrete product, particularly, to a cement composition which permits preparing concrete and manufacturing a concrete product demoldable from a mold in a short time, and to a method of manufacturing a concrete product by using the cement composition.

### Background Art

In the conventional method of manufacturing, for example, a concrete product in a short time, concrete is prepared first by adding to cement fine aggregates and/or coarse aggregates, water and, as required, additives such as a water-reducing agent, a fluidizing agent, and fumed silica, followed by mixing the resultant mixture and subsequently pouring the mixed mass into a mold while vibrating the mold.

Then, the mold is transferred into a steam curing chamber or another suitable place and covered with canvas. The mold is left to stand under this condition for 1 to 5 hours, followed by elevating the mold temperature at a rate of 20°C/hour to 60 to 80°C by means of steam injection. The mold is kept at the heated temperature for 2 to 3 hours, followed by stopping the steam injection to subject the mold to natural cooling. Finally, the concrete is demolded from the mold to obtain a desired concrete product.

In the conventional method, however, it takes a long time to manufacture a concrete product, though the method outlined above is effective among various conventional methods for shortening the required time. In general, only one concrete product can be manufactured in a day in the case of using a single mold.

Also, in the case of manufacturing a centrifugally molded concrete product such as a Hume concrete pipe or a concrete pile, the time required for the process ranging between the curing step and the step of demolding the molded concrete product from the mold is basically equal to that for the manufacture of the concrete product by the conventional method. To reiterate, it takes a day to manufacture a centrifugally molded concrete product in the case of using a single mold. Such being the situation, it is strongly required to take measures for efficiently using the mold so as to improve the productivity and manufacturing cost of the concrete product.

A measure for improving the manufacturing effi-ciency of concrete product is proposed in, for example, Japanese Patent Disclosure (Kokai) No. 60-21839. It is proposed to prepare a cement composition by adding to cement predetermined amounts of sulfates of lithium, aluminum, gallium and thallium or double salts containing these metals, followed by molding the resultant composition and, then, curing the molded concrete at a high temperature. This prior art does not require a pre-curing, making it possible to heat the molded concrete at a rate of 40°C/hour to the highest curing temperature of at least 80°C. As a result, the productivity can be improved.

In the above-noted prior art, ettringite is said to be formed in an early stage by the function of the sulfates or double salts of sulfates, making it unnecessary to apply a pre-curing. In this prior art, however, ettringite is formed in an excessively short time, making it difficult to obtain a desired workability. It has been found that a serious problem is brought about in actually using the cement composition disclosed in this prior art for manufacturing a concrete product. Specifically, it is necessary to mix first a concrete which does not contain the sulfates or double salts of sulfates, followed by transferring the mixed concrete into a mixer arranged in the vicinity of a mold. Then, the mixed concrete is mixed again with the sulfates or double salts of sulfates added thereto, followed by promptly pouring the resultant concrete into the mold so as to obtain a desired concrete product.

Naturally, the conventional technique, in which a concrete composition once prepared by mixing is transferred into another mixer, markedly impairs the productivity. It follows that it is very difficult to put the particular technique to a practical use because a mass production is of high importance when it comes to concrete products.

It is certainly possible to retard the hydrating reaction by decreasing the amounts of the sulfates or double salts of sulfates. In this case, however, it is impossible to achieve the hydrating reaction soon after the pouring of the concrete composition into the mold.

The above-noted situation in the field of concrete is exactly the same as in the field of mortar.

### Disclosure of Invention

An object of the present invention is to provide a cement composition and concrete which permits ensuring a required workability even after the placing of the concrete and which is hardened in an early stage after the placing of the concrete so as to allow the placed concrete to exhibit promptly a high mechanical strength.

According to an aspect of the present invention, there is provided a cement composition, comprising:
Portland cement or a blended cement; and
a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO.

According to another aspect of the present invention, there is provided a cement composition, comprising:
Portland cement or a blended cement;
a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO; and
a sulfate of an alkaline metal in an amount not larger than 10% by weight based on an anhydride of said sulfate.

According to another aspect of the present invention, there is provided a cement composition, comprising:
a Portland cement clinker;
gypsum; and
a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO to the sum of the Portland cement clinker and gypsum.

According to another aspect of the present invention, there is provided a cement composition, comprising:
a Portland cement clinker;
gypsum;
a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO to the sum of the Portland cement clinker and gypsum, and
a sulfate of an alkaline metal in an amount not larger than 10% by weight based on an anhydride of said sulfate.

According to another aspect of the present invention, there is provided a method of manufacturing concrete, comprising the steps of:
adding fine aggregates and/or coarse aggregates, water and, as required, additives to a cement composition comprising Portland cement or a blended cement, a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO, and a sulfate of an alkaline metal in an amount not larger than 10% by weight based on an anhydride of said sulfate;
mixing the resultant concrete composition, followed by pouring the mixed composition into a mold;
curing the mixed composition within the mold under the air atmosphere so as to obtain a cured concrete;
demolding the cured concrete from the mold; and
allowing the demolded concrete to stand under the air atmosphere or curing the demolded concrete in water, thereby to obtain a desired concrete.

According to another aspect of the present invention, there is provided a method of manufacturing a concrete product, comprising the steps of:
adding fine aggregates and/or coarse aggregates, water and, as required, additives to a cement composition comprising Portland cement or a blended cement, a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO, and a sulfate of an alkaline metal in an amount not larger than 10% by weight based on an anhydride of said sulfate;
mixing the resultant concrete composition, followed by pouring the mixed concrete into a mold, said mold being immediately put in a steam curing chamber or covered with canvas into which steam is introduced so as to heat the mold to 50 to 85°C over 30 minutes to 1 hour;
stopping to introduce steam;
taking the mold out of the steam curing chamber or removing the canvas from the mold when the mechanical strength of the concrete is increased to reach 10 MPa or more; and
demolding the concrete from the mold, followed by allowing the demolded concrete to stand under the air atmosphere or to put the demolded concrete in water for curing the concrete, thereby obtaining a concrete product.

Further, according to still another embodiment of the present invention, there is provided a self-leveling material, comprising as a main component a cement composition consisting essentially of Portland cement or a blended cement, and a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO.

### Brief Description of Drawings

FIG. 1 is a graph showing the relationship between temperature and time after mixing step of the mortar;
FIG. 2 is a graph showing the relationship between temperature and time after mixing step of the concrete;
FIG. 3 is a graph showing the relationship between the compression strength of concrete and the adding amount of a quick lime powder;
FIG. 4 is a graph showing the relationship between the compression strength of concrete and the addition amount of anhydrous sodium sulfate;
FIG. 5 is a graph showing the relationship between compression strength and time after mixing step of the concrete;
FIG. 6 is a graph showing the relationship between compression strength and curing age of the concrete; and
FIG. 7 is an oblique view showing a box-shaped reinforced concrete product.

### Best Mode of Carrying Out the Invention

The present invention provides a cement composition, comprising a Portland cement or a blended cement, and a predetermined amount of a quick lime powder prepared by pulverizing a quick lime lump consuming 70 to 500 mL of 4N hydrochloric acid, said powder having a Blaine specific surface area of at least 3,000 cm²/g. It is possible to add to the cement a predetermined amount of a sulfate of an alkaline metal together with the quick lime powder.

If the hydrating reaction of cement is carried out immediately after the water pouring to the cement composition, the initial hardening is promoted in the manufacture of concrete or a concrete product. In this case, however, it is impossible to obtain a sufficient workability required for the manufacture of the concrete product. This is highly significant because it is very important to ensure and continue to ensure a sufficient workability.

In developing new additives to cement, it is important for the resultant concrete to exhibit a slump and changes with time in the slump close to those of a plain concrete, i.e., concrete which does not contain the additives. A flow value, i.e., flowability, of a cement mortar and changes with time in the flow value can be used as criteria for estimating the slump characteristics noted above.

The hydrating reaction performed within concrete or mortar is accompanied by heat generation, leading to temperature elevation of the concrete or mortar. Where concrete or mortar, which does not contain any additive, is left to stand under the air atmosphere to permit heat release immediately after the mixing step, the highest temperature is reached in general in 10 to 12 hours after the mixing step. However, if the highest temperature can be reached in 6 to 8 hours, which is about half the generally required time given above, the concrete or mortar is enabled to exhibit a high mechanical strength in a very short time, which is highly significant.

As a result of an extensive research conducted in an attempt to obtain concrete or mortar exhibiting a high mechanical strength in a short time, the present inventor has found that it is very effective to add a powder prepared by pulverizing a lump of quick lime consuming 70 to 500 mL of 4N hydrochloric acid, said powder having a Blaine specific surface area of at least 3,000 cm²/g. Specifically, it has been found that the addition of the particular powder permits ensuring a sufficient workability. It has also been found that hydration of the minerals contained in the Portland cement is promoted by the heat generated by the hydrating reaction of the quick lime in the initial stage before hardening of the concrete so as to allow the concrete to exhibit a high mechanical strength.

Further, it has been found that, in the case of adding quick lime exhibiting an excessively high hydrating reaction rate, heat is generated during the concrete mixing step. As a result, the concrete is hardened, making it impossible to obtain a slump sufficient for pouring the mixing concrete into a mold. On the other hand, the powdery quick lime used in the present invention has been found to exhibit an appropriate hydrating reaction rate, with the result that a sufficient workability of concrete can be ensured and that the initial hardening of the concrete can be promoted.

In the present invention, the hydrating reaction rate of the quick lime is evaluated in terms of consumption of 4N hydrochloric acid specified in the Standard Test Method by Japan Lime association. To be more specific, 4 liters of pure water heated to 30°C is poured into a glass beaker equipped with a stirrer, followed by dripping an indicator phenolphthalein while stirring the water in the beaker. Further, 100g of a measuring sample sieved to be sized at 2 to 10 mm is put at once into the glass beaker. Still further, 4N hydrochloric acid is dripped into the beaker to maintain the resultant solution somewhat reddish. The total amount of the 4N hydrochloric acid dripped into the beaker over a period of 10 minutes is used as an evaluating criterion of the hydrating reaction rate of the quick lime.

In the present invention, the quick lime used is defined to consume 70 to 500 mL of 4N hydrochloric acid. Preferably, the consumption should desirably be 90 to 400 mL, and, more desirably, 100 to 200 mL over a period of 10 minutes. The quick lime used in the present invention should be pulverized to have a Blaine specific surface area of at least 3,000 cm²/g, preferably, 3,500 to 5,000 cm²/g. It is desirable to use a quick lime specified in JIS (Japanese Industrial Standards) R 9001. Particularly, it is desirable to use a special grade of quick lime having a larger CaO content within the JIS specification.

The quick lime powder prepared by pulverizing a quick lime lump consuming the above-noted amount of hydrochloric acid and having a Blaine specific surface area of at least 3,000 cm²/g should be added in an amount of 3 to 15% by weight based on CaO. If the amount of the quick lime powder is smaller than 3% by weight, an appreciable effect cannot be produced. If the addition amount is larger than 15% by weight, however, heat is excessively generated. Also, a stability over a long time of the concrete is rendered unsatisfactory. The addition amount of the quick lime powder should fall preferably within a range of between 4 and 12% by weight, and more preferably, within a range of between 6 and 10% by weight.

The Portland cement used in the present invention includes, for example, an ordinary Portland cement, a high early strength Portland cement, and a white Portland cement. On the other hand, the blended cement used in the present invention includes, for example, a blast furnace slug cement, a fly ash cement and a silica cement.

A further prominent effect can be produced in the present invention, if a sulfate of an alkaline metal is added to the cement composition together with the quick lime powder. The sulfates of alkaline metals used in the present invention include, for example, sodium sulfate and potassium sulfate. Particularly effective is to use sodium sulfate. These sulfates should be added in an amount of at most 10% by weight, preferably, 0.1 to 5% by weight, and more preferably, 0.1 to 2% by weight. Where the addition amount of the sulfate exceeds 10% by weight, the cured concrete is likely to bear efflorescence.

Where the quick lime powder and a sulfate of an alkaline metal are used together, a synergetic effect is produced so as to markedly promote the hardening of the concrete, compared with the case where each of these powder and sulfate is added singly. Specifically, because of the synergetic effect, the compression strength of the concrete is increased to reach 10 MPa or more in 2 to 3 hours after the curing with steam. Naturally, the cement composition containing both the quick lime powder and the sulfate of an alkaline metal is particularly suitable for use in the manufacture of concrete and a concrete product.

The cement composition described above covers the case where a quick lime powder is added singly or together with a sulfate of an alkaline metal to Portland cement or blended cement available on the market. In preparing the Portland cement, however, a suitable amount of gypsum is added to a cement clinker, followed by pulverizing the resultant mixture in a mill. It follows that the cement composition of the present invention can also be prepared by adding gypsum and a quick lime lump, together with a sulfate of an alkaline metal, as required, to a Portland cement clinker, followed by pulverizing the resultant mixture in a mill so as to obtain a powdery mixture having a Blaine specific surface area of at least 3,000 cm²/g, preferably, 3,500 to 5,000 cm²/g. The Portland cement clinker used in this method includes, for example, an ordinary Portland cement clinker, a high early strength Portland cement clinker, and a white Portland cement clinker.

The quick lime lump consuming 70 to 500 mL of 4N hydrochloric acid, which is defined previously, can be used as an additive to the Portland cement clinker. Also, the addition amount of the quick lime lump as well as the addition amount and kind of the sulfate of an alkaline metal is as in the case of using the Portland cement or blended cement available on the market. It should be noted that, in order to prevent the quick lime powder contained in the cement composition from being airation during storage of the cement composition, it is desirable to add at most 0.5% by weight of a higher fatty acid such as stearic acid to the composition.

The sulfates of alkaline metals used in the present invention include, for example, sodium sulfate and potassium sulfate. It is particularly desirable to use sodium sulfate. Incidentally, sodium sulfate includes anhydride and decahydrate. It is desirable to use anhydrous sodium sulfate because the anhydride can be handled easily.

In preparing concrete by using the cement composition of the present invention, additives are used, as required, together with water and aggregates. These additives include, for example, a water-reducing agent, a fluidizing agent, an AE agent, a II-type anhydrous gypsum and a fumed silica. The resultant composition is mixed, followed by pouring the mixed concrete into a mold or by placing the mixed concrete, as desired.

If the cement composition of the present invention is used for manufacturing a concrete product, heat is generated in the initial stage after pouring concrete into the mold. As a result, the highest temperature is reached in a short time. In addition, the highest temperature is rendered higher than usual. It follows that, if steam is introduced immediately after pouring of concrete without applying a pre-curing so as to achieve temperature elevation to 50 to 85°C in 30 minutes to one hour, the concrete temperature is further elevated even if the steam injection is stopped thereafter, with the result that the curing of the concrete is markedly promoted.

Therefore, if a steam curing is applied for a short time in the manufacture of a concrete product, a compression strength of at least 10 MPa required for the demolding of a concrete product from the mold is reached in 2 to 3 hours after the concrete mixing step, making it possible to markedly increase the number of cycles per day of using the mold for manufacturing the concrete product. Further, in the case of using the cement composition of the present invention for manufacturing concrete products, the concrete after the mixing step is promptly cured, even if the concrete is cured under the air atmosphere in place of applying the steam curing, making it possible to obtain concrete of a high mechanical strength.

Further, it is possible to prepare a self-leveling material containing the cement composition of the present invention as a main component. For applying a self-leveling material to a concrete product, a bleeding water is removed at the time when bleeding of concrete is substantially finished, followed by applying a self-leveling material and subsequently applying immediately a steam curing. In this case, peeling or cracking does not take place so as to obtain a concrete product having a smooth beautiful surface.

It should be noted that the concrete prepared by using the cement composition of the present invention is expanded in the demolding step by about 500 × 10⁻⁶ to 1,000 × 10⁻⁶. In other words, the concrete, when used as a reinforced concrete, functions as a shrinkage-compensated concrete or a chemical prestressed concrete. It follows that the concrete of the present invention exhibits a very high resistance to cracking caused by shrinkage and permits markedly increasing the tensile strength.

Let me describe various Experiments and Examples of the present invention, which are believed to set forth more clearly the technical idea of the present invention. It should be noted that the "quick lime" used in each of these Experiments and Examples is of the special grade within the specification of JIS R 9001 referred to previously.

### (Experiment 1)

Mortar was prepared by using a high early strength Portland cement available on the market. Specifically, 6% by weight of a quick lime powder was added to the Portland cement to prepare a cement composition. Various kinds of quick lime powders differing from each other in the consumption of 4N hydrochloric acid were used in this experiment. Then, sand having a maximum size of 5 mm were added to the cement composition in a weight ratio of 1 (cement) : 2 (sand), followed by adding 38% of water and 1% of a water-reducing agent based on the cement amount to the resultant mortar composition. Changes with time in the flow value of the resultant mortar were measured, with the results as shown in Table 1. As shown in Table 1, quick lime powders A to G were used in this experiment. In addition, the experiment covered the cases where a quick lime powder was not added at all to the high early strength Portland cement, where 6% by weight of a quick lime powder and 1% by weight of anhydrous sodium sulfate were added to the Portland cement, and where 6% of aluminum sulfate was added in place of the quick lime powder to the Portland cement.

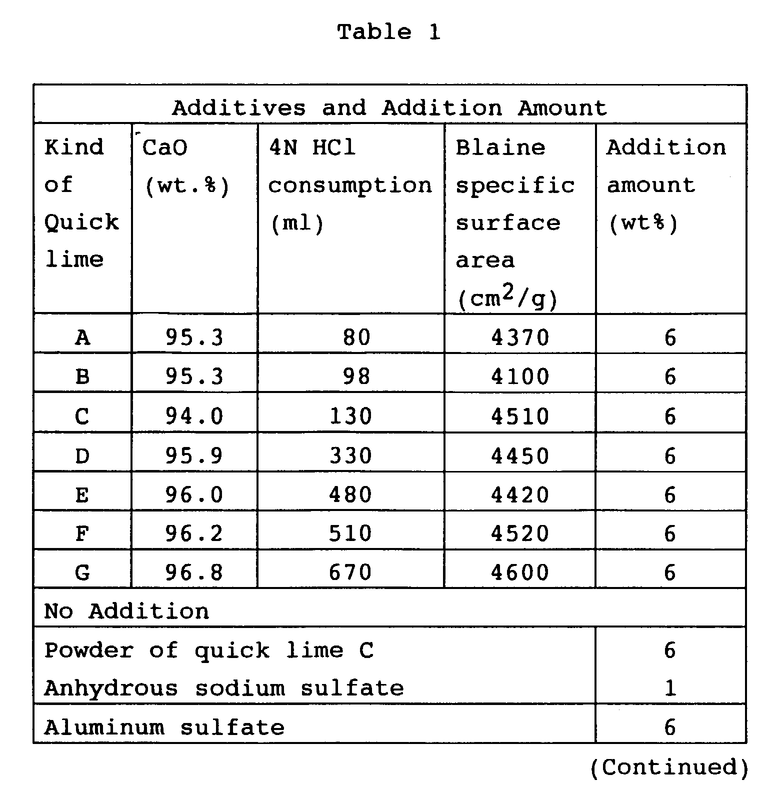

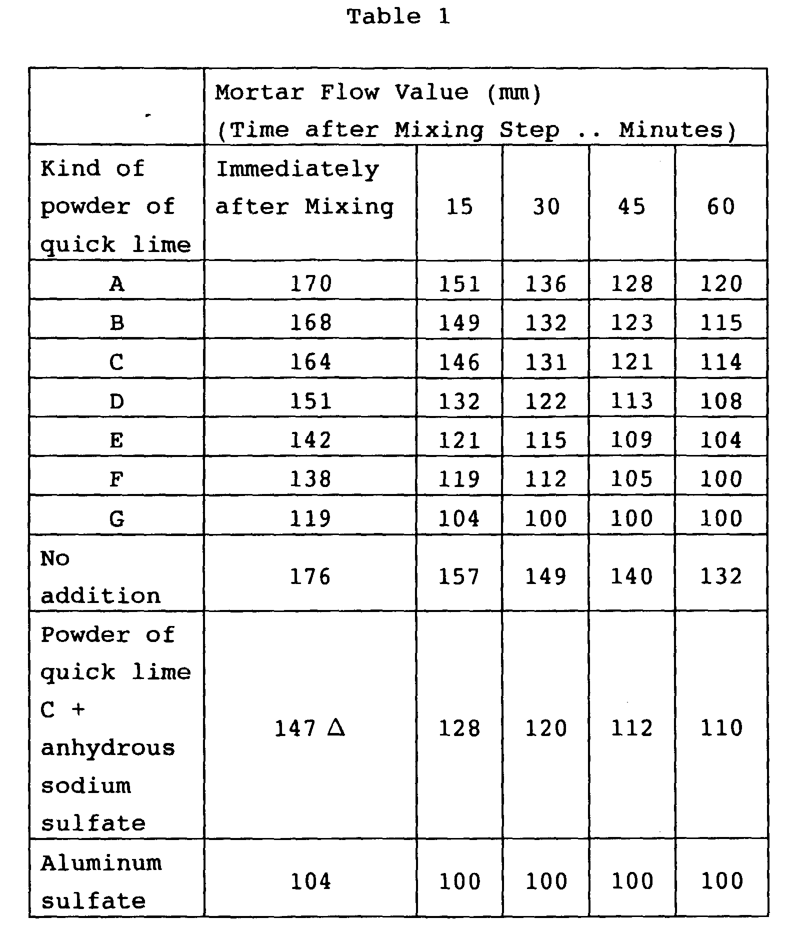

As apparent from Table 1, where any of quick limes A to E was added to the Portland cement, the flow value of the mortar immediately after the mixing step fell within a range of between 170 mm and 142 mm, which were higher than 140 mm, and were not remarkably lower than 176 mm in the case where quick lime was not added at all. In other words, the mortar prepared by adding a quick lime exhibits a sufficiently high flowability.

Table 1 also shows that, where any of quick limes A to E was added to the Portland cement, the flow value of the mortar 60 minutes after the mixing step fell within a range of between 120 mm and 104 mm, which is higher than 101 mm, supporting that a sufficient workability can be ensured in an hour after the mixing step.

On the other hand, in the case of adding the quick lime powder F consuming 510 mL of 4N hydrochloric acid, the flow value of the mortar immediately after the mixing step was found to be 138 mm. Likewise, in the case of adding the quick lime powder G consuming 670 mL of 4N hydrochloric acid, the flow value of the mortar immediately after the mixing step was found to be 119 mm. In short, the flow value of the mortar was found to be relatively low even immediately after the mixing step in these cases. In addition, the flow value 60 minutes after the mixing step was found to be only 100 mm, supporting that the mortar in each of these cases is quite incapable of exhibiting a satisfactory flowability.

Table 1 also covers the case where anhydrous sodium sulfate was added together with the powder of quick lime C. In this case, the resultant mortar was found to be quite satisfactory in flowability. Specifically, the flow value of the mortar immediately after the mixing step was found to be 147 mm. Also, the flow value 60 minutes after the mixing step was 110 mm.

Further, Table 1 covers the case where aluminum sulfate was added to the Portland cement. In this case, the flow value of the resultant mortar immediately after the mixing step was found to be only 104 mm. Also, the flow value 15 minutes after the mixing step was 100 mm, supporting that the mortar is quite unsatisfactory in flowability. This clearly supports that ettringite was formed in a short time, making it impossible to obtain a desired workability for the manufacture of concrete.

The experimental data shown in Table 1 clearly support that, in preparing a satisfactory concrete, it is important to increase the addition amount of a water-reducing agent so as to allow the concrete composition immediately after the mixing step to exhibit a slump close to that of concrete which does not contain an additive. Also, for obtaining the desired slump, the mortar is required to exhibit the flow value shown in Table 1 of at least 140 mm. In order to meet these requirements, it is necessary for the quick lime added to the Portland cement to consume at most 500 mL of 4N hydrochloric acid defined previously. Where these requirements are met, the concrete composition after the mixing step is enabled to maintain a sufficient flowability until the plain concrete placing step. In other words, the concrete composition is small in change with time in flowability and exhibits a sufficient workability.

In the quick lime which can be commercially manufactured, the lower limit in the consumption of 4N hydrochloric acid is considered to be 70 mL. Such being the situation, the quick lime used in the present invention is defined to consume 4N hydrochloric acid in an amount falling within a range of between 70 mL and 500 mL.

### (Experiment 2)

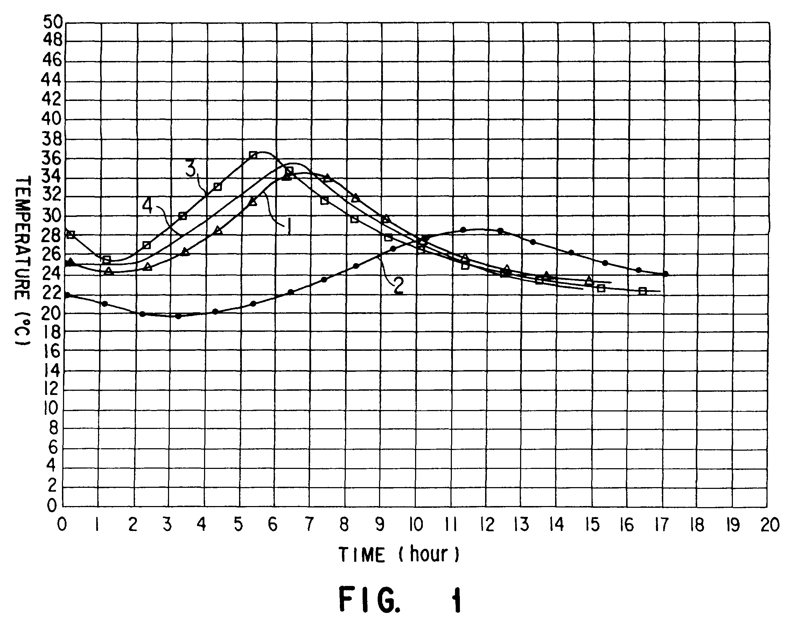

Mortar was prepared by using a high early strength Portland cement available on the market. Specifically, the quick lime C shown in Table 1 was added to the Portland cement to prepare a cement composition. Then, sand having a maximum size of 5 mm was added to the cement composition in a weight ratio of 1 (cement): 2 (sand), followed by adding 38% of water and 1% of a water-reducing agent based on the cement amount to the resultant mortar. Changes with time in temperature of the mortar were measured under the condition that heat can be released within a constant temperature and humidity room set at 20°C, with the results as shown in FIG 1. Curve 1 in FIG. 1 covers the case where 12% by weight of the quick lime C was added to the high early strength Portland cement. Curve 2 in FIG. 1 covers the case where a quick lime was not added at all to the Portland cement. Further, curve 3 in FIG. 1 covers the case where 12% by weight of the quick lime G shown in Table 1 was added to the high early strength Portland cement.

As denoted by curve 1 shown in FIG. 1, the highest temperature of 34.5°C was reached in only 7 hours after the molding step in the case of adding 12% by weight of the quick lime C. On the other hand, the highest temperature of only 28.2°C was reached in 12 hours after the molding step, where a quick lime was not added to the Portland cement (see curve 2).

Further, where the quick lime G shown in Table 1 was added, the mortar temperature was elevated to 29°C immediately after the mixing step, as denoted by curve 3 in FIG. 1. In this case, however, the mixed mortar failed to exhibit a flowability required for the molding. Therefore, the mortar was forcedly molded under vibration. When the temperature elevation after the molding step was measured, the highest temperature of 36.9°C was reached in 5 hours and 30 minutes, which was shorter than in the case of adding the quick lime C (curve 1). What should be noted is that the quick lime G excessively promotes the hardening of the mortar, resulting in failure to obtain a workability required for preparation of concrete.

FIG. 1 further shows curve 4 covering the addition of the quick lime D shown in Table 1, which consumes 330 mL of 4N hydrochloric acid. As apparent from FIG. 1, curve 4 (quick lime D consuming 330 mL of 4N hydrochloric acid) is intermediate between curve 1 (quick lime C) and curve 3 (quick lime G) in changes with time in the mortar temperature. In addition, FIG. 1 clearly supports that the highest temperature reached is rendered higher and the time for reaching the highest temperature is rendered shorter in accordance with increase in the consumption of 4N hydrochloric acid.

### (Experiment 3)

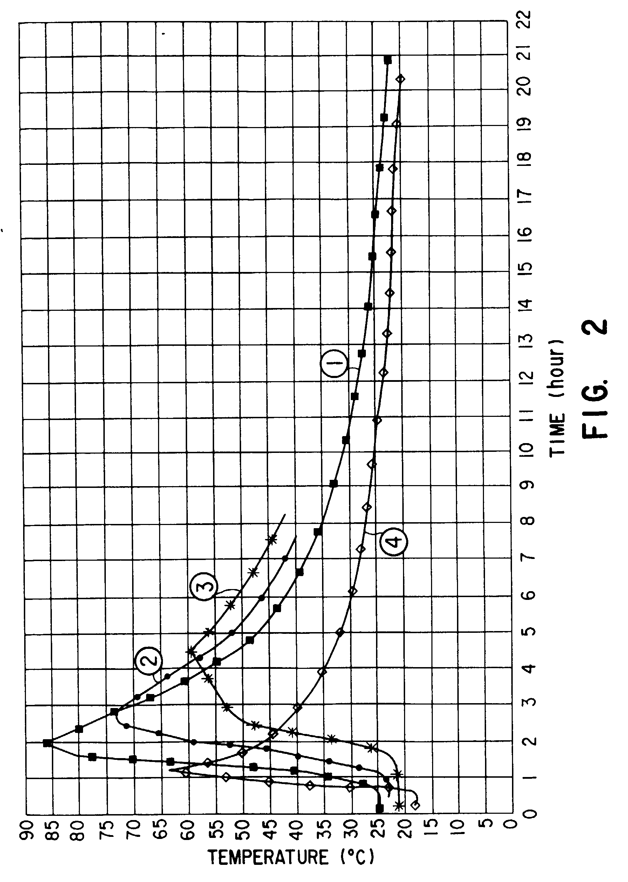

A high early strength Portland cement available on the market was used in this experiment. Specifically, concrete containing 38% of water based on the cement, having a slump of 8±2.5 cm, and containing the cement in an amount of 500 kg/m³ of the concrete was poured into a mold having a diameter of 10 cm and a height of 20 cm. Then, the mold was put in a steam curing chamber for temperature elevation to 60°C in an hour, followed by naturally cooling the mold. During the cooling process, the concrete temperature was measured by a thermocouple inserted into the concrete. FIG. 2 shows the experimental data relating to the changes with time in the concrete temperature.

Curve ① shown in FIG. 2 covers addition of 12% by weight of the quick lime C shown Table 1 and 4% by weight of anhydrous sodium sulfate. Curve ② covers addition of 12% by weight of only the quick lime C noted above. Curve ③ covers a plain concrete which does not contain any of the quick lime powder and the sodium sulfate. Further, curve ④ in FIG. 2 shows the changes with time in the ambient temperature during the curing process.

As apparent from curve ① shown in FIG. 2, the concrete temperature reaches as high as 86°C in 2 hours in the case of adding 12% of the powder of the quick lime C and 4% by weight of anhydrous sodium sulfate. Also, curve ② shows that the concrete temperature reaches 74°C in 2 hours and 45 minutes in the case of adding 12% of the powder of the quick lime C alone. These experimental data clearly support that a quick lime powder and a sulfate of an alkaline metal collectively produce a synergetic effect for elevating the concrete temperature.

### (Experiment 4)

Mortar was prepared by using a high early strength Portland cement available on the market. Specifically, a quick lime powder or anhydrous sodium sulfate was added in an amount shown in Table 2 to the Portland cement to prepare a cement composition. Then, Yonesato sand, produced in Yonesato, Japan, having a maximum size of 5 mm were added to the cement composition in a weight ratio of 1 (cement) : 2 (sand), followed by adding 38% of water based on the cement amount to the resultant mortar. Further, the resultant mortar was poured into a mold having a diameter of 10 cm and a height of 20 cm. A thermocouple was inserted into the mortar, which was left to stand within a constant temperature and humidity room set at 20°C so as to measure the changes with time in the mortar temperature. Table 2 also shows the experimental data in respect of the highest temperature of the mortar and the time required for reaching the highest temperature.

**Table 2**

| Powdery Additives and Amount | Time for reaching highest mortar temp. (hr-min.) | Highest mortar temperature (°C) |
|---|---|---|
| Quick lime C 12% by weight | 7-54 | 34.3 |
| Quick lime C 15% by weight | 6-00 | 40.0 |
| Quick lime C 12% by weight Anhydrous sodium sulfate, 3 wt.% | 4-36 | 42.0 |

As apparent from Table 2, the quick lime C and the anhydrous sodium sulfate used together collectively produce a synergetic effect of drastically increasing the highest temperature reached and drastically shortening the time required for reaching the highest temperature.

### (Experiment 5)

An ordinary Portland cement available on the market was used in this experiment. Specifically, concrete containing 38% of water based on the cement, having a slump of 8±2.5 cm, and containing the cement in an amount of 400 kg/m³ of the concrete was poured into a mold having a diameter of 10 cm and a height of 20 cm. Then, 30 minutes after the mixing step, the mold was put in a steam curing chamber for temperature elevation to 60°C in an hour, followed by stopping the steam injection and leaving the mold to stand as it was. Further, the resultant concrete was demolded from the mold 2.5 hours and 4 hours after the mixing step, respectively. Some of the resultant samples were immediately tested for the compression strength. The other samples demolded from the mold 4 hours after the mixing step were left to stand in a constant temperature and humidity room maintained at 20°C and, then, tested for the compression strength 24 hours after the concrete mixing step. Table 3 shows the experimental data.

**Table 3**

| | Compression Strength of Concrete after mixing step(MPa) | | |
|---|---|---|---|
| Additives to ordinary Portland cement | 2.5 hours later | 4 hours later | 24 hours later |
| Quick lime C: 12 wt.% | - | 15.0 | 28.2 |
| Quick lime C: 12 wt.% Anhydrous sodium sulfate: 1 wt.% | 15.8 | 20.0 | 32.3 |
| Anhydrous sodium sulfate: 1 wt.% | - | 4.0 | 20.5 |
| No addition | - | 1.8 | 19.2 |

As apparent from Table 3, the concrete containing the quick lime C shown in Table 1 exhibits more than 10 MPa of compression strength, which is generally required for the demolding, only 4 hours after the concrete mixing step. Where anhydrous sodium sulfate is added together with the quick lime C, the concrete exhibits such a high compression strength as 15.8 MPa only 2.5 hours after the mixing step. In conclusion, the experimental data given in Table 3 clearly support that a quick lime powder and sodium sulfate collectively produce a synergetic effect of promptly increasing the mechanical strength of the concrete so as to permit the concrete to be demolded from the mold only 2 to 3 hours after the concrete mixing step.

### (Example 1)

A varied amount of quick lime C shown in Table 1 and 1% by weight of anhydrous sodium sulfate were added to an ordinary Portland cement to prepare a cement composition. Then, water and other additives such as aggregates were added to the cement composition to prepare a concrete, followed by mixing the concrete so as to measure the early strength of the resultant concrete. For comparison, a plain concrete which did not contain any of the quick lime powder and anhydrous sodium sulfate was also tested for the mechanical strength. Table 4 shows the mix proportion of concrete.

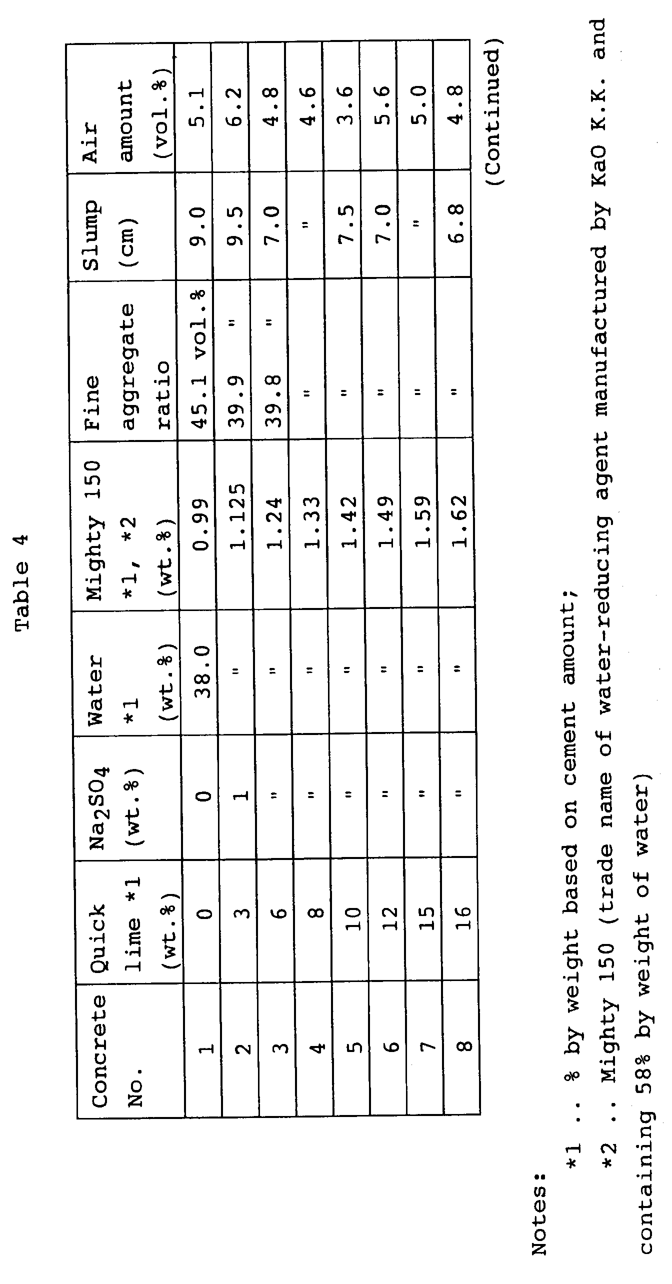

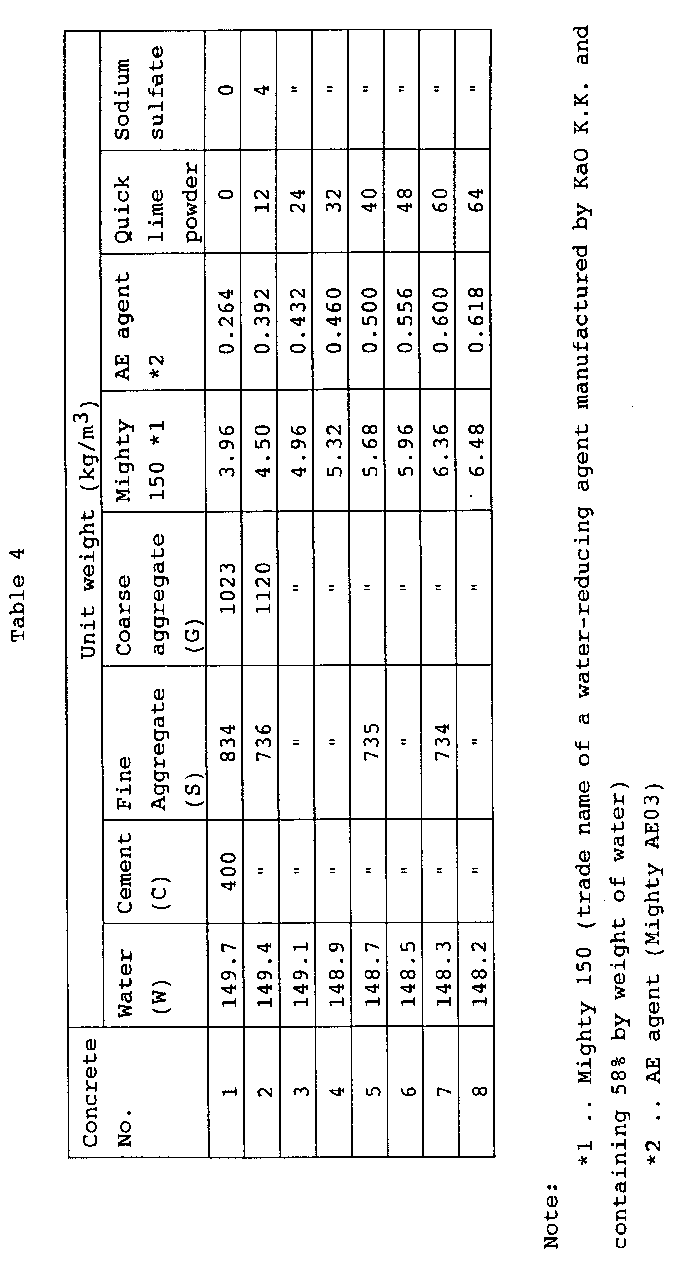

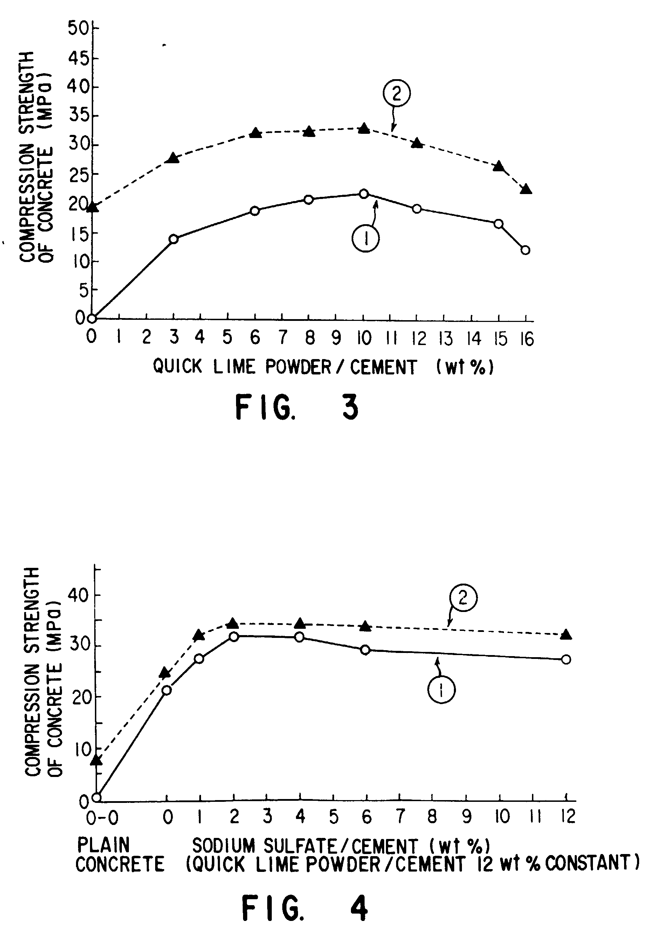

The concrete immediately after the molding step was put in a steam curing chamber, followed by introducing steam into the chamber for the temperature elevation tO 60°C in an hour and subsequently stopping the steam introduction into the chamber for naturally cooling the molded concrete. Then, the mold was taken out of the curing chamber four hours after the water addition for preparing the concrete, followed by demolding the molded concrete from the mold. The concrete was left to stand within a room for measuring the compression strength 4 hours and 24 hours later. FIG. 3 shows the results.

Curve ① in FIG. 3 denotes the relationship between the addition amount of the quick lime C and the compression strength of the concrete 4 hours later. On the other hand, curve ② denotes the relationship between the addition amount of the quick lime C and the compression strength of the concrete 24 hours later. FIG. 3 clearly shows that the compression strength of the concrete is increased with increase in the addition amount of the quick lime. Although the compression strength is somewhat lowered if the quick lime addition amount exceeds 10% by weight, the concrete exhibits an excellent strength compared with a plain concrete. Particularly, a prominently high effect was produced in improvement of the compression strength 4 hours later. In other words, the difference between the highest compression strength and the lowest strength (0% of quick lime addition) for curve ① is markedly larger than that for curve ②.

### (Example 2)

The powdery quick lime C shown in Table 1 was added in an amount of 12% by weight to a high early strength Portland cement together with a varied amount of anhydrous sodium sulfate in order to evaluate the effect given by the addition amount of sodium sulfate to the early strength of the resultant concrete. For comparison, a plain concrete, which did not contain any of the quick lime powder and anhydrous sodium sulfate, was also tested for the early strength. Table 5 shows the mix proportion of concrete.

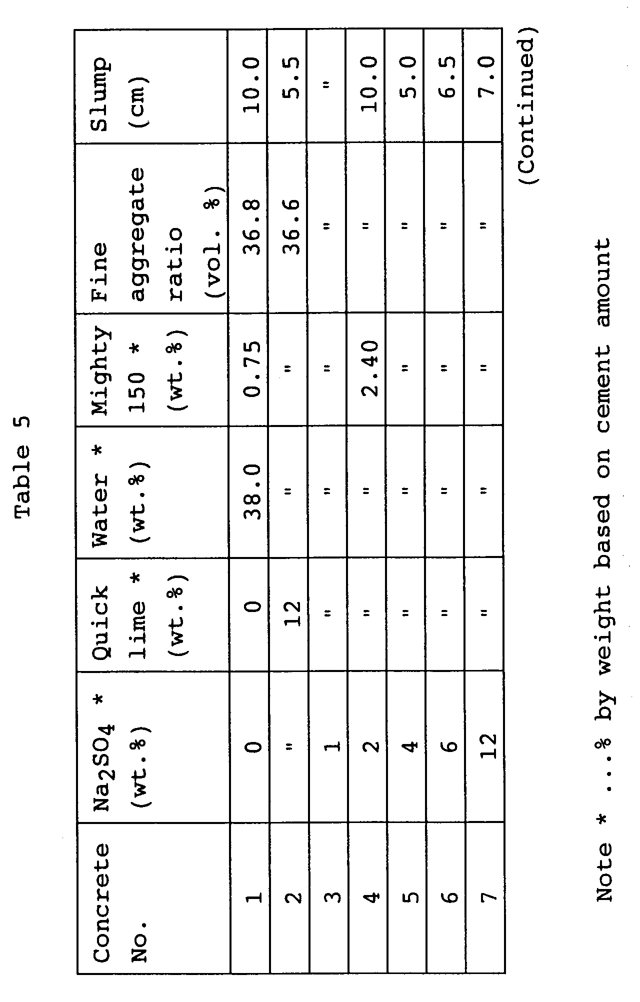

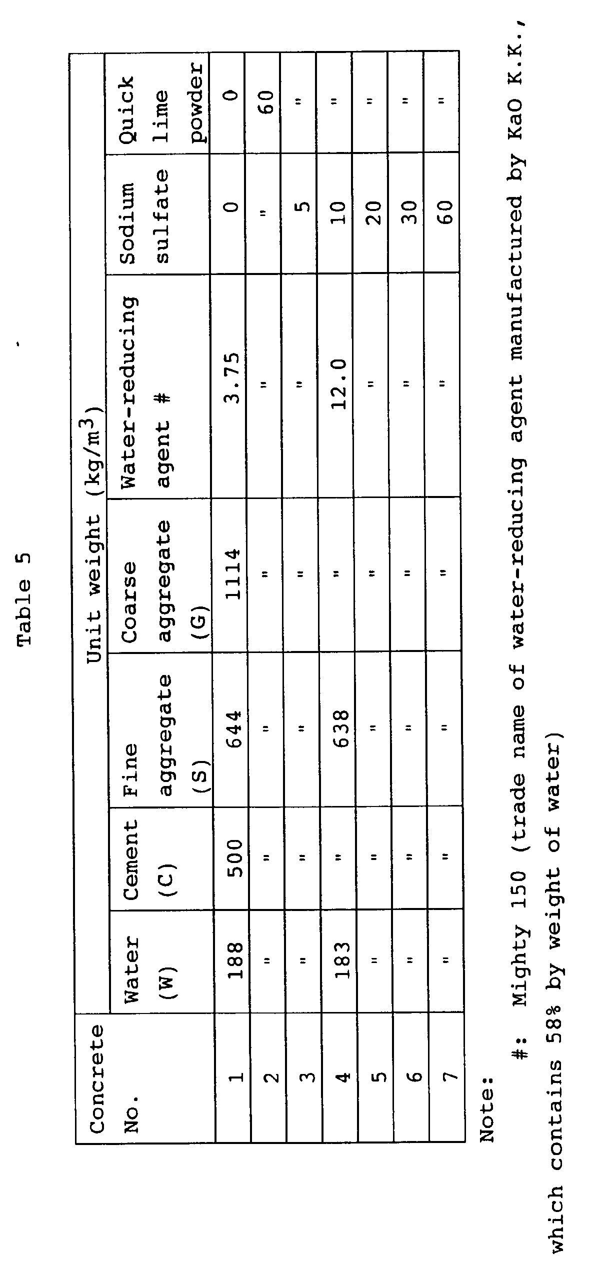

For the curing, the molded concrete was put in a steam curing chamber immediately after the molding step, followed by introducing steam into the chamber for the temperature elevation to 60°C in an hour and subsequently stopping the steam introduction into the chamber for naturally cooling the molded concrete. Then, the mold was taken out of the curing chamber four hours after the water addition for the concrete preparation, followed by demolding the molded concrete from the mold. The concrete was left to stand within a room for measuring the compression strength 2.5 hours and 4 hours later. FIG. 4 shows the results.

Curve ① in FIG. 4 denotes the relationship between the addition amount (% by weight) of sodium sulfate based on the cement amount and the compression strength of the concrete 2.5 hours later, with the quick lime content set constant at 12% by weight based on the cement amount. On the other hand, curve ② denotes the relationship between the addition amount (% by weight) of sodium sulfate based on the cement amount and the compression strength of the concrete 4 hours later, with the quick lime content set constant at 12% by weight based on the cement amount. Curves ① and ② in FIG. 4 clearly show that the compression strength of the concrete is increased with increase in the addition amount of anhydrous sodium sulfate. Although the compression strength is somewhat lowered if the anhydrous sodium sulfate addition amount exceeds 2% by weight, the concrete exhibits an excellent strength, compared with a plain concrete which does not contain any of anhydrous sodium sulfate and quick lime powder, until the addition amount of anhydrous sodium sulfate reaches 12% by weight.

### (Example 3)

A cement composition was prepared by adding 12% by weight of the quick lime C shown in Table 1 and 1% by weight of anhydrous sodium sulfate or potassium sulfate to an ordinary Portland cement available on the market. Then, water and aggregates were added to the resultant cement composition, followed by pouring the resultant concrete into a mold having a diameter of 10 cm and a height of 20 cm for measuring the compression strength of the resultant concrete. The compression strength was measured for three cases. In one of these cases, the mold was left to stand within a room for 24 hours. In another case, the mold was put in a steam curing chamber 30 minutes after the concrete mixing step, followed by introducing steam into the chamber for the temperature elevation to 60°C over one hour and subsequently stopping the steam injection. The resultant concrete was demolded from the mold four hours later for measuring the compression strength. In the third case, the concrete demolded from the mold was left to stand within a room until 24 hours for measuring the compression strength. Table 6 shows the results.

**Table 6**

| Additives (wt.%) based on cement | | | Compression strength (MPa) of concrete | | |
|---|---|---|---|---|---|
| Powdery quick lime C | Anhydrous sodium sulfate | Potassium sulfate | Mold left in room for 24 hours | Demolded from mold 4 hours later | 24 hours after demolding from mold |
| 12 | 1 | - | 34.0 | 19.0 | 34.0 |
| 12 | - | 1 | 31.4 | 18.4 | 32.9 |

As seen from Table 6, sodium sulfate is somewhat superior to potassium sulfate in the effect of promoting the concrete hardening.

### (Example 4)

Concrete was prepared for evaluating the effect produced by a quick lime added in an amount of 12% by weight to the cement used for preparing the concrete. The quick lime used was prepared by pulverizing a lump of quick lime containing 95.2% by weight of CaO and consuming 110 mL of 4N hydrochloric acid into a quick lime powder H having a Blaine specific surface area of 4820 cm²/g. Table 7 shows the mix proportion of Samples 1 to 6 in this Example.

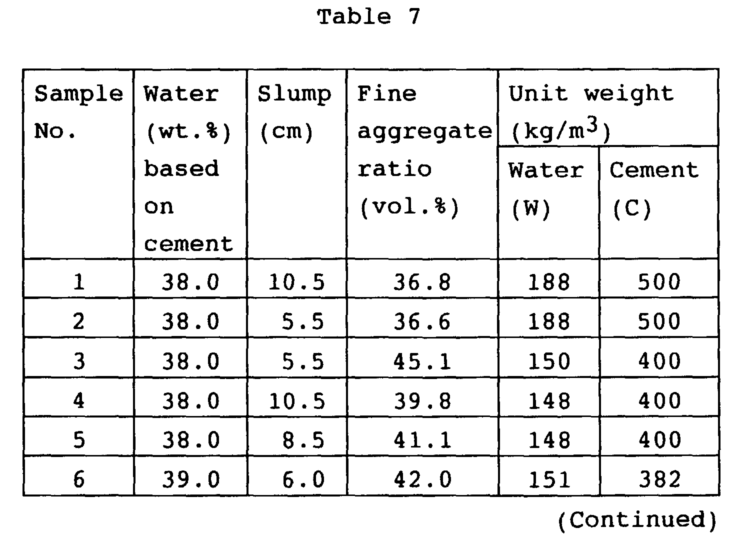

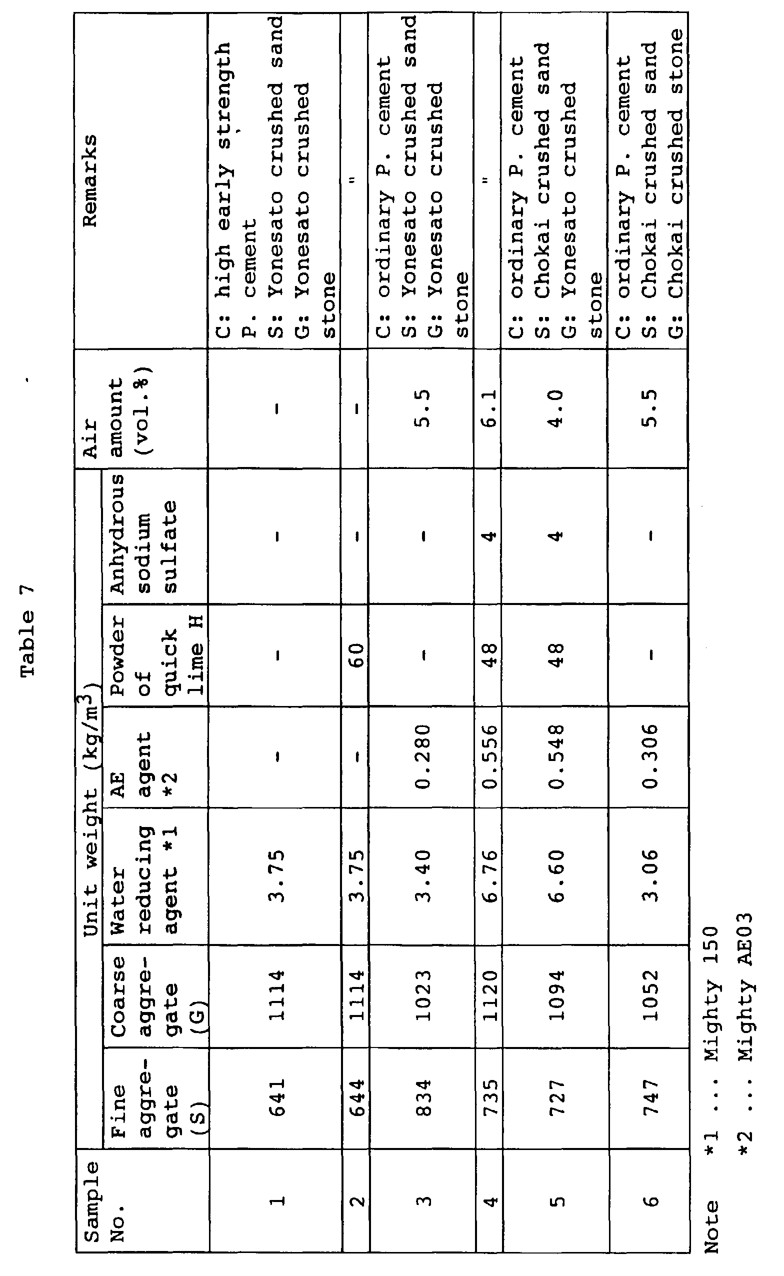

The concrete was filled in a mold having a diameter of 10 cm and a height of 20 cm. Then, 30 minutes after the water addition for preparing the concrete, the mold was put in a steam curing chamber, followed by injecting steam into the chamber for the temperature elevation to 60°C over a period of one hour. Further, the steam injection was stopped and the steam curing chamber was left to stand. The resultant concrete was demolded from the mold 2 hours and 20 minutes after the water addition for preparing the concrete so as to measure the compression strength of the concrete. Still further, the concrete demolded from the mold was left to stand within a constant temperature and humidity room maintained at 20°C so as to measure the compression strength of the concrete 24 hours later.

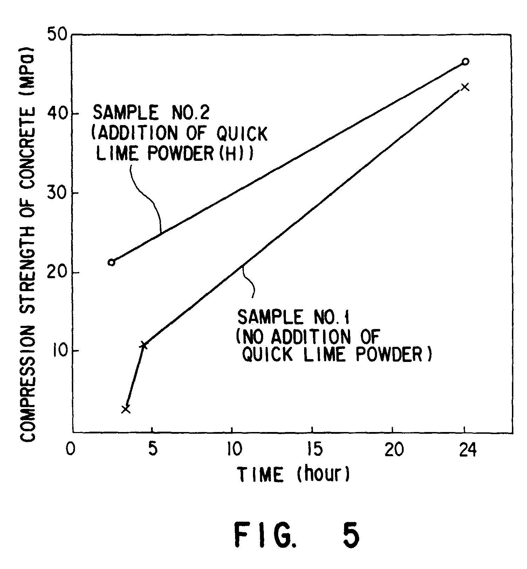

Similarly, Sample No. 1 of the concrete, which did not contain the quick lime H, was cured and tested for the compression strength 3 hours and 20 minutes, 4 hours and 30 minutes, and 24 hours after the water addition for preparing the concrete. FIG. 5 shows the results. As apparent from the experimental data shown in FIG. 5, the concrete prepared by using the cement composition of the present invention can be demolded from the mold in an earlier time and exhibits an excellent increase in compression strength after demolding from the mold.

### (Example 5)

The concrete of Sample No. 4 shown in Table 7 was mixed and, then, poured into a mold having a diameter of 10 cm and a height of 20 cm. Then, 30 minutes after the water addition for preparing the concrete, the mold was put in a steam curing chamber, followed by introducing steam into the chamber for the temperature elevation to 60°C over a period of one hour and, subsequently stopping the steam injection.

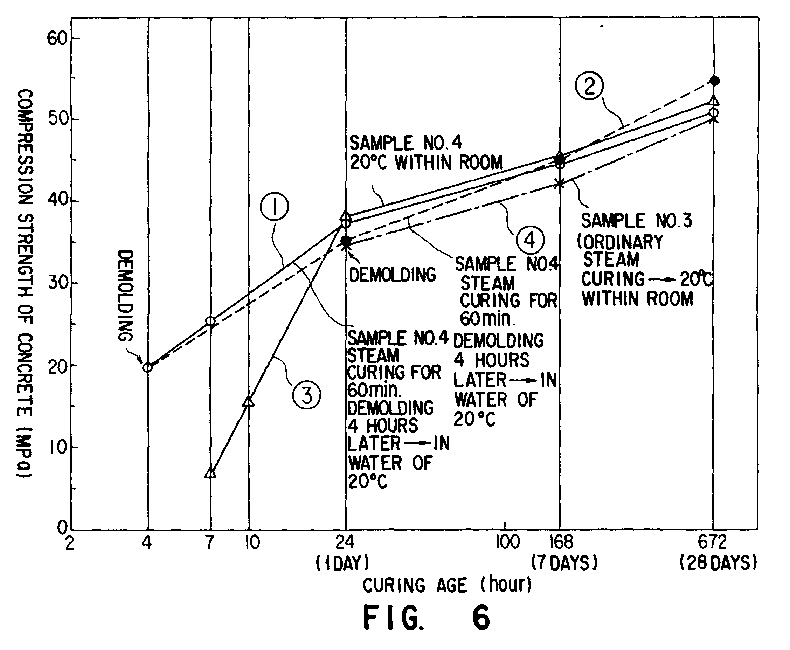

The molded concrete was demolded from the mold four hours after the water addition for preparing the concrete and, then, left to stand within a constant temperature and humidity room maintained at 20°C. Further, the compression strength of the molded concrete was measured 1 day, 7 days and 28 days later. FIG. 6 shows the results. Incidentally, one of the sample pieces was tested for the compression strength immediately after the demolding from the mold and 7 hours after the water addition for preparing the concrete, with the results as denoted by curve ① in FIG. 6.

Similarly, the concrete of Sample No. 4 was mixed and, then, poured into a mold sized as noted-above. Then, 30 minutes after the water addition for preparing the concrete, the mold was put in a steam curing chamber, followed by introducing steam into the chamber for the temperature elevation to 60°C over a period of one hour and, subsequently stopping the steam injection. The molded concrete was demolded from the mold four hours after the water addition for preparing the concrete.

Further, the molded concrete demolded from the mold was left to stand within a constant temperature and humidity room maintained at 20°C for the cooling purpose, followed by putting the concrete in water of 20°C for the curing purpose. The compression strength of the resultant concrete was measured 1 day, 7 days and 28 days later, with the results as shown in curve ② in FIG. 6.

### (Example 6)

The concrete of Sample No. 4 shown in Table 7 was mixed and, then, poured into a mold having a diameter of 10 cm and a height of 20 cm, followed by leaving the mold to stand within a constant temperature and humidity room maintained at 20°C without curing with steam. Then, the concrete was tested for the compression strength 7 hours, 10 hours, 1 day, 7 days and 28 days later, with the results as denoted by curve ③ in FIG. 6.

Further, the concrete of Sample No. 3 shown in Table 7, i.e., a plain concrete which did not contain any of a quick lime and anhydrous sodium sulfate, was mixed and, then, poured into a mold having a diameter of 10 cm and a height of 20 cm, followed by a precuring at 20°C for 3 hours. Then, steam was introduced into the steam curing chamber to elevate temperature at a rate of 20°C/hour to 65°C. The temperature was maintained at 65°C for 3 hours, followed by stopping the steam injection for the natural cooling.

The molded concrete was demolded from the mold 24 hours later and left to stand within a constant temperature and humidity room maintained at 20°C for measuring the compression strength 1 day, 7 days and 28 days later, with the results as denoted by curve ④ in FIG. 6.

FIG. 6 showing the experimental data for Examples 5 and 6 clearly supports the prominent effects produced by the cement composition of the present invention. Specifically, where steam is introduced into the concrete prepared by using the cement composition of the present invention, the concrete only 4 hours after the water addition for preparing the concrete exhibits a compressing strength of 19.5 MPa, which is far higher than 10 MPa required for demolding the concrete from the mold.

It should also be noted that, even where the mold is left to stand within a constant temperature and humidity room maintained at 20°C, the compression strength required for demolding the molded concrete from the mold is reached in only about 10 hours (curve ③ ). In addition, the compression strength of the concrete for any of 1 day, 7 days and 28 days later was found to be higher than for the plain concrete (curve ④).

### (Example 7)

Concrete was prepared by using a cement mixed with 8% by weight of a powdery quick lime I having a Blaine specific surface area of 4550 cm²/g, containing 96.8% by weight of CaO, and prepared by pulverizing a lump of quick lime consuming 415 mL of 4N hydrochloric acid and with 1% by weight of anhydrous sodium sulfate. Also prepared was a plain concrete which did not contain any of these additives of quick lime and anhydrous sodium sulfate. The concrete for each of these two cases was cured in a constant temperature and humidity room maintained at 20°C for one day for measuring the compression strength.

In preparing the concrete, 38% of water was added to the cement. The slump of the concrete was 8±1.5 cm, and the cement content of the concrete was 400 kg/m³. Further, fine and coarse aggregates used were those produced in Yonesato, Japan. Further, each of 8% of the quick lime I and 1% of anhydrous sodium sulfate noted above was based on the amount of the cement. Still further, the slump of the concrete was adjusted by controlling the amount of Mighty 150, which is a trade name of a water-reducing agent manufactured by Kao K.K.

In the plain concrete, the water-reducing agent was added in an amount of 0.99% by weight based on the cement in contrast to 1.90% by weight for the concrete containing the additives. In other words, the concrete containing the additives specified in the present invention necessitates a larger amount of the water-reducing agent.

The plain concrete was found to exhibit 19.2 MPa of compression strength in contrast to 33.6 MPa for the concrete containing the additives. In short, the concrete prepared by using a quick lime powder consuming 415 mL of 4N hydrochloric acid exhibits a markedly improved compression strength, compared with the plain concrete.

### (Example 8)

A molded concrete exhibiting a slump of 18 cm was prepared by using an ordinary Portland cement mixed with 8% by-weight of the quick lime C shown in Table 1 and 1% by weight of anhydrous sodium sulfate. The resultant concrete was cured for one day in a constant temperature and humidity room maintained at 20°C, followed by demolding the cured concrete from the mold and subsequently curing further the demolded concrete in water maintained at 20°C. The compression strength of the cured concrete was measured 1 day, 3 days and 7 days later. For comparison, a similar experiment was conducted for a plain concrete which did not contain the above-noted additives. Table 8 shows the concrete mix proportion, changes with time in the slump and compression strength of the concrete.

**Table 8**

| Sample No. | Water (wt%) # | Slump (cm) | Fine aggregate ratio (vol.%) | Cement Amount (kg/m³) | Water-reducing agent (wt.%) # | Quick lime powder (wt%) # | Sodium sulfate (wt.%) # | Air amount (vol.%) |
|---|---|---|---|---|---|---|---|---|
| ① | 59.7 | 17.0 | 38.7 | 310 | 0.49 | - | - | 5.1 |
| ② | 59.7 | 19.0 | 38.0 | 310 | 0.51 | 8 | 1 | 5.2 |

| Sample No. | Change with time in slump (cm) | | | | | Compression strength (MPa) | | |
|---|---|---|---|---|---|---|---|---|
| | 15 minutes | 30 minutes | 45 minutes | 60 minutes | 90 minutes | 1 day | 3 days | 7 days |
| ① | 14.0 | 10.5 | 9.5 | 7.5 | 5.5 | 5.5 | 17.8 | 27.3 |
| ② | 15.5 | 15.5 | 11.0 | 9.0 | 7.0 | 11.6 | 22.7 | 29.7 |

| | | | | | | | | |
|---|---|---|---|---|---|---|---|---|
| Note # .. based on cement amout | | | | | | | | |

Sample ① in Table 8 denotes a plain concrete, with sample ② falling within the technical scope of the present invention. As apparent from the experimental data, sample ② of the present invention is substantially equal to the plain concrete ① in the amount of slump and in the change with time in the slump, supporting that the sample of the present invention can be used sufficiently satisfactorily as a ready-mixed concrete like the conventional plain concrete. Further, sample ② of the present invention has been found to exhibit a prominently excellent compression strength in, particularly, the early period after the concrete placing. What should also be noted is that a compression strength of 18 MPa, which is desired to be achieved 28 days after the concrete placing, was achieved in less than 3 days after the concrete placing in sample ② of the present invention.

### (Example 9)

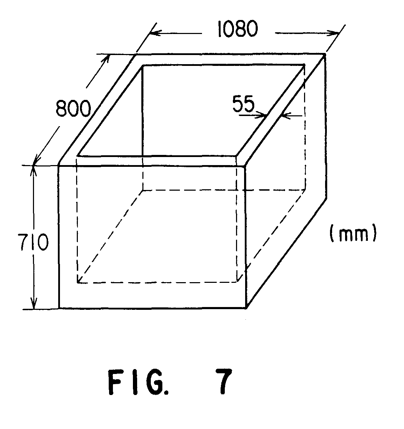

The concrete mix proportion for Sample No. 5 shown in Table 7 was mixed in a mixer. On the other hand, prepared was a mold for manufacturing a box-shaped reinforced concrete product shown in FIG. 7. The mixed concrete was loaded in the mold, followed by fastening the loaded concrete using a rod type vibrator. Immediately after the vibration, the upper surface of the mold was covered with a canvas, followed by introducing steam into a clearance formed between the mold and the canvas for the temperature elevation to 60°C over a period of one hour. Then, the steam injection was stopped.

The canvas was removed four hours after the water addition to the concrete, followed by demolding the reinforced concrete product from the mold. Further, the concrete product was moved to a hang-up yard by using a crane provided in advance with a hook. No abnormality was found in the concrete product after any of the demolding step and the moving step. Incidentally, the same concrete was molded in a mold having a diameter of 10 cm and a height of 20 cm, followed by curing the resultant concrete product under the same conditions as above. The compression strength of the resultant concrete measured 4 hours and 24 hours later was found to be 18.2 MPa and 35.7 MPa, respectively.

### (Example 10)

The concrete mix proportion for Sample No. 6 shown in Table 7 was loaded in a mold sized at 50 cm × 50 cm × 10 cm, the amount of the loaded concrete being 95% by volume of the mold. The loaded concrete was fastened by using a vibrator and, then, left to stand within a room for 2 hours so as to remove the bleeding water on the loaded concrete surface. On the other hand, a self-leveling material was prepared by sufficiently mixing 100 parts by weight of an ordinary Portland cement available on the market, 4 parts by weight of the powdery quick lime H referred to previously, 1 part by weight of anhydrous sodium sulfate, 1.3 parts by weight of a water-reducing agent, 0.1 part by weight of a viscosity increasing agent, 0.1 part by weight of an antifoamer, and 100 parts by weight of sand having a maximum size of 2.5 mm. Then, a slurry was prepared by adding 40 parts by weight of water to the resultant self-leveling material, followed by pouring the resultant slurry onto the surface of the concrete surface. Immediately after the concrete surface was rendered flat, a steam curing was applied to the molded concrete. In this steam curing step, the temperature was elevated to 65°C at a rate of 20°C/hr. The molded concrete was maintained at 65°C for 3 hours, followed by naturally cooling the molded concrete. When the concrete demolded from the mold was observed, the self-leveling material was found to have been bonded sufficiently to the concrete surface. Also, the surface finish was found to have been very beautiful.

### (Example 11)

The powdery quick lime B shown in Table 1 and anhydrous sodium sulfate were added in amounts of 6% by weight and 1% by weight, respectively, to a blast furnace slug cement type A available on the market so as to prepare a cement composition of the present invention. Then, concrete was prepared by using the particular cement composition, followed by curing the resultant concrete at 20°C for one 24 hours under a humid atmosphere so as to measure the compression strength. A similar test was applied to a plain concrete, in which any of the quick lime powder and anhydrous sodium sulfate was not added to the cement, for comparison.

In preparing the concrete, 59.7% of water was added to the cement. The slump of the concrete was 18± 1.5 cm, and the air volume was 5±1%. The amount of the cement was 310 kg/m³. Further, "Onoda SP-X (trade name of a water-reducing agent manufactured by Chichibu Onoda K.K.) was added in an amount of 0.5% by weight based on the cement amount.

The concrete prepared by using the cement composition of the present invention was found to exhibit a slump of 17.2 cm, and a compression strength one day later of 9.8 MPa. On the other hand, the plain concrete was found to exhibit a slump of 18.0 cm and a compression strength one day later of 4.2 MPa. The experimental data clearly support that the cement composition of the present invention prepared by mixing the additives specified in the present invention to a blended cement makes it possible to obtain a concrete exhibiting an excellent compression strength in, particularly, the early stage, like the cement prepared by mixing the particular additives to the Portland cement.

### (Example 12)

A cement composition of the present invention having a Blaine specific surface area of 3,600 cm²/g was prepared by an ordinary method. Specifically, an ordinary Portland cement clinker was prepared by mixing cement raw materials in a rotary kiln, followed by adding gypsum to the resultant clinker. Then, a lump of the quick lime C shown in Table 1 and potassium sulfate were added in amounts of 8% by weight and 1% by weight, respectively, based on the sum of clinker and the gypsum, followed by pulverizing the resultant mixture in a mill so as to obtain the cement composition of the present invention noted above.

As described above, the cement composition of the present invention enables the concrete prepared by using the composition to exhibit a sufficiently high workability. Also, the concrete exhibits a markedly high compression strength in a very short time after the concrete placing step, compared with the Portland cement or blended cement available on the market. It follows that the cement composition of the present invention permits demolding the resultant concrete from the mold in a very short time, making it possible to increase the number of cycles of using the mold in a unit time. It follows that the manufacturing cost of the concrete product can be markedly lowered.

The cement composition of the present invention can be widely used in placing concrete and in manufacturing various concrete products. To reiterate, the concrete prepared by using the cement composition of the present invention exhibits a high flowability before the concrete is loaded in a mold. Also, the concrete loaded in the mold is rapidly cured, making it possible to demold the concrete product from the mold in a very short time. It follows that the concrete placing can be performed efficiently. Also, in the case of manufacturing a concrete product, the mold used for manufacturing the concrete product can be used again efficiently.

## Claims

1. A cement composition, comprising:
Portland cement or a blended cement; and
a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO.

2. A cement composition, comprising:
Portland cement or a blended cement;
a quick lime powder prepared by pulverizing a quick lime lump consuming 70 to 500 mL of 4N hydrochloric acid, said powder having a Blaine specific surface area of at least 3,000 cm²/g and contained in an amount of 3 to 15% by weight based on CaO; and
a sulfate of an alkaline metal in an amount not larger than 10% by weight based on an anhydride of said sulfate.

3. The cement composition according to any one of claims 1 and 2, wherein said Portland cement is selected from the group consisting of an ordinary Portland cement, a high early strength Portland cement, and a white Portland cement.

4. The cement composition according to any one of claims 1 and 2, wherein said blended cement is selected from the group consisting of a blast furnace slug cement, a fly ash cement, and a silica cement.

5. The cement composition according to claim 2, wherein said sulfate of an alkaline metal is selected from the group consisting of sodium sulfate and potassium sulfate.

6. A cement composition, comprising:
a Portland cement clinker;
gypsum; and
a quick lime lump consuming 70 to 500 mL of 4N hydrochloric acid, said lump being added in an amount of 3 to 15% by weight based on CaO relative to the sum of said Portland cement clinker and gypsum, and said composition being pulverized to have a Blaine specific surface area of at least 3,000 cm²/g.

7. A cement composition, comprising:
a Portland cement clinker;
gypsum;
a quick lime lump consuming 70 to 500 mL of 4N hydrochloric acid, said lump being added in an amount of 3 to 15% by weight based on CaO relative to the sum of said Portland cement clinker and gypsum; and
a sulfate of an alkaline metal in an amount not larger than 10% by weight based on an anhydride of said sulfate relative to the sum of said Portland cement clinker and gypsum, said composition being pulverized to have a Blaine specific surface area of at least 3,000 cm²/g.

8. The cement composition according to claim 6 or 7, wherein said Portland cement clinker is selected from the group consisting of an ordinary Portland cement clinker, a high early strength Portland cement clinker, and a white Portland cement clinker.

9. A method of manufacturing a ready-mixed concrete, comprising the steps of:
adding fine aggregates and/or coarse aggregates, water and, as required, additives to the cement composition defined in any one of claims 1, 2, 6 and 7; and
mixing the resultant concrete mixture.

10. A method of manufacturing a concrete product, comprising the steps of:
adding fine aggregates and/or coarse aggregates, water and, as required, additives to the cement composition defined in any one of claims 1, 2, 6 and 7;
mixing the resultant concrete mixture, followed by pouring the mixed concrete into a mold;
curing the mixed concrete within the mold under the air atmosphere so as to obtain a cured concrete;
demolding the cured concrete from the mold; and
allowing the demolded concrete to stand under the air atmosphere or putting the demolded concrete in water to achieve curing, thereby to obtain a desired concrete product.

11. A method of manufacturing a concrete product, comprising the steps of:
adding fine aggregates and/or coarse aggregates, water and, as required, additives to the cement composition defined in any one of claims 1, 2, 6 and 7;
mixing the resultant concrete mixture, followed by pouring the mixed concrete into a mold;
curing the mixed concrete for the curing purpose within the mold immediately after said molding step by putting the mold in a steam curing chamber or covering the mold with a canvas for introducing steam into a clearance between the mold and said canvas for elevating the temperature to 50 to 85°C over a period of 30 minutes to 60 minutes, followed by stopping the steam introduction;
demolding the mold from the steam curing chamber or removing the canvas from the mold when the cured concrete exhibits at least 10 MPa;
demolding the cured concrete from the mold; and
allowing the demolded concrete to stand under the air atmosphere or putting the demolded concrete in water to achieve curing, thereby to obtain a desired concrete product.

12. A self-leveling material containing as a main component a cement composition defined in any one of claims 1, 2, 6 and 7.
